# FASCICULE DE BREVET EUROPEEN

(11) **EP 3 172 636 B1**
(45) Date de publication et mention de la délivrance du brevet: **25.12.2019**
(21) Numéro de dépôt: 15738638.4
(22) Date de dépôt: 16.07.2015
(51) Int. Cl.: G06F 1/3234, G04G 21/08

(54) **OBJET PORTABLE TACTILE AYANT UNE EXTINCTION DES TOUCHES TACTILES SIMPLIFIEE**
BERÜHRUNGSEMPFINDLICHER TRAGBARER GEGENSTAND MIT EINEM VEREINFACHTEN AUSSCHALTSYSTEM DER BERÜHRUNGSEMPFINDLICHEN TASTEN
TACTILE PORTABLE OBJECT HAVING SIMPLIFIED TACTILE KEY SUPPRESSION

(30) Priorité: 24.07.2014 EP 14178356
(43) Date de publication de la demande: 31.05.2017
(73) Titulaire: The Swatch Group Research and Development Ltd, 2074 Marin (CH)
(72) Inventeur: GUANTER, Jean-Charles, 2517 Diesse (CH); HECK, Pascal, 2000 Neuchâtel (CH); PFEUTI, Jean-Nicolas, 2068 Hauterive (CH)
(74) Mandataire: Goulette, Ludivine
(86) Numéro de dépôt international: PCT/EP2015/066316
(87) Numéro de publication internationale: WO 2016/012349

(56) Documents cités:
- EP-A1- 2 086 211
- EP-A2- 1 284 450
- GB-A- 2 092 352
- US-A- 5 812 498
- US-A1- 2004 047 242
- US-A1- 2004 108 861
- US-A1- 2009 061 823
- US-A1- 2010 296 369
- US-A1- 2013 141 381
- US-A1- 2013 235 704
- US-B1- 6 476 797

## Description

La présente invention concerne un objet portable comprenant un boitier fermé par une glace formant une enceinte dans laquelle un module électronique coopérant avec des moyens de commande est agencé. Ces moyens de commande comprennent au moins une pluralité de touches tactiles.

### ARRIERE PLAN TECHNOLOGIQUE

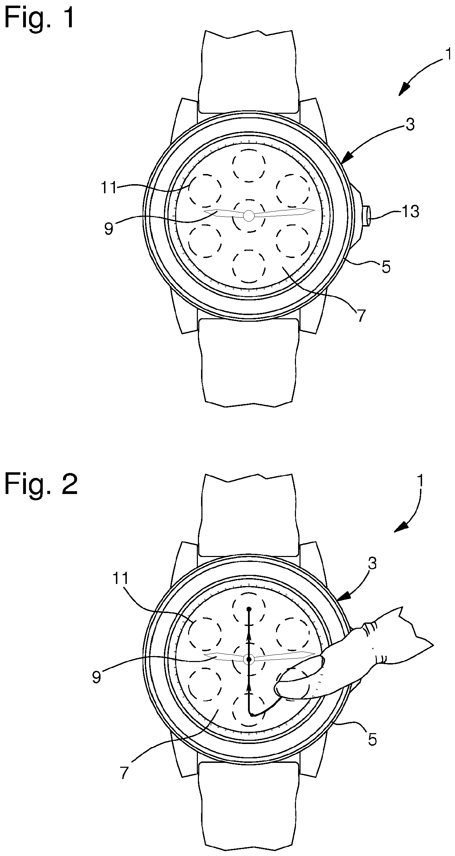

Il est connu des objets portables tels que des montres électroniques 1. Ces montres électroniques visibles à la figure 1 comprennent un boîtier 3 composé d'une carrure 5 fermée par un fond et une glace 7, sous la glace, des moyens d'affichage 9 sont agencés.

Ces montres électroniques comprennent un module électronique coopérant avec des moyens de commande. Ces moyens de commande comprennent au moins une pluralité de touches tactiles 11.

En général, sur ces montres à touches tactiles, on désire pouvoir éteindre le système tactile afin d'économiser de l'énergie ou éviter qu'un simple contact sur l'une des touches n'entraine un dérèglement de la montre comme une modification de l'affichage ou même une déprogrammation. En effet, les touches tactiles, par exemple du type capacitif, sont balayées en permanence à une fréquence comprise entre 2Hz et 100Hz pour permettre la détection d'un contact. Ce balayage permanent consomme donc de l'énergie.

A ce titre, l'enclenchement des touches tactiles s'effectue au moyen d'un bouton 13 qui peut être la couronne.

Pour le déclenchement des touches tactiles, il peut être prévu par exemple une séquence de désactivation spécifique comme visible à la figure 2, une durée, c'est à dire que si pendant un laps de temps déterminé aucune touche n'est activée, le déclenchement s'opère, ou un bouton de désactivation.

Or, un inconvénient de la manipulation de désactivation spécifique est qu'il faut que l'utilisateur s'en souvienne.

De plus, un inconvénient de la durée d'attente (aussi appelée Timeout) est justement sa durée qui laisse un système non utilisé toujours enclenché pendant plusieurs secondes et donc susceptible d'être activé involontairement.

Un inconvénient de la solution du bouton est qu'il devient nécessaire d'avoir un bouton spécifique de façon à avoir une manipulation identique depuis n'importe quel endroit du programme. Or, un bouton dédié nécessite une conception plus complexe du boîtier de l'objet portable.

Le document EP 1 284 450 A2 décrit un objet portable dans lequel plusieurs zones peuvent être activées ensemble pour obtenir le passage d'un premier mode à un deuxième mode.

### RESUME DE L'INVENTION

L'invention a pour but de pallier les inconvénients de l'art antérieur en proposant de fournir un objet portable dont l'interface tactile peut être désactivée très simplement.

A cet effet, la présente invention consiste en un objet portable comprenant un boîtier composé d'un châssis fermé par une glace formant une enceinte dans laquelle un module électronique est placé, ledit module électronique coopérant avec des moyens de commande comportant au moins une pluralité de plages tactiles pour interagir avec le module électronique, chaque plage tactile étant située sur une surface du boîtier, ledit module électronique étant programmé pour opérer dans un premier mode de fonctionnement dans lequel au moins les plages tactiles sont électriquement aptes à être activées, l'activation d'une plage tactile se faisant par pression avec un corps permettant une perturbation optique de ladite plage tactile, et pour opérer dans un second mode de fonctionnement dans lequel au moins les plages tactiles ne sont pas électriquement aptes à être activées, caractérisé en ce que le passage du premier mode de fonctionnement au second mode de fonctionnement se fait suite à la détection par ledit module électronique de l'activation simultanée d'au moins un nombre déterminé de plages de contact, les plages tactiles activées étant choisies aléatoirement.

L'avantage de la présente invention est qu'elle ne nécessite pas de bouton spécifique supplémentaire ni de délai d'attente pour opérer le passage du premier mode de fonctionnement au second mode de fonctionnement.

Dans un premier mode de réalisation avantageux, le nombre déterminé de plages de contact activées pour permettre le passage du premier mode de fonctionnement au second mode de fonctionnement est égal à au moins 50% du nombre plages de contact présentes.

Dans un second mode de réalisation avantageux, le nombre déterminé de plages de contact activées pour permettre le passage du premier mode de fonctionnement au second mode de fonctionnement est égal à la totalité du nombre de plages de contact présentes.

Dans un troisième mode de réalisation avantageux, l'activation des plages tactiles se fait par contact avec un corps permettant une perturbation du champ électrique vu par la plage tactile.

Dans un cinquième mode de réalisation avantageux, le corps permettant une perturbation du champ électrique est un volume d'eau.

Dans un sixième mode de réalisation avantageux, l'activation des plages tactiles se fait par pression avec un corps permettant, par effet résistif, l'apparition d'une tension au niveau de la plage tactile.

Dans un septième mode de réalisation avantageux, l'activation des plages tactiles se fait par pression avec un corps permettant, par effet piézoélectrique, l'apparition d'une tension au niveau de la plage tactile.

Dans un autre mode de réalisation avantageux, l'activation des plages tactiles se fait par pression avec un corps permettant une perturbation optique de la plage tactile.

L'invention concerne également un objet portable comprenant un boîtier composé d'un châssis fermé par un écran formant une enceinte dans laquelle un module électronique est placé, ledit écran comportant une glace associée à une grille électrique de détection formant des moyens de commande coopérant avec le module électronique pour interagir avec lui, ledit module électronique étant programmé pour opérer dans un premier mode de fonctionnement dans lequel au moins l'écran est activé et pour opérer dans un second mode de fonctionnement dans lequel au moins l'écran est désactivé, caractérisé en ce que le passage du premier mode de fonctionnement au second mode de fonctionnement se fait suite à la détection par ledit module électronique d'au moins un nombre déterminé de zones aléatoires activées.

Dans un premier mode de réalisation avantageux, le nombre déterminé de zones activées est égal à au moins trois.

Dans un second mode de réalisation avantageux, le nombre déterminé de zones activées est égal à au moins le nombre de doigt d'une main.

Dans un troisième mode de réalisation avantageux, l'écran est du type capacitif, l'activation étant opérée avec un corps permettant une perturbation du champ électrique.

Dans un quatrième mode de réalisation avantageux, l'écran est du type résistif.

Dans un cinquième mode de réalisation avantageux, l'écran est du type optique.

Dans un autre mode de réalisation avantageux, l'écran est du type piézoélectrique.

Dans un autre mode de réalisation avantageux, le corps permettant une perturbation du champ électrique est un volume d'eau.

Dans un autre mode de réalisation avantageux, le premier mode de fonctionnement est un mode de fonctionnement normal dans lequel le module électronique est actif, le second mode de fonctionnement étant un mode de fonctionnement en veille dans lequel le module électronique est inactif.

Dans un autre mode de réalisation avantageux, le premier mode de fonctionnement est un mode de fonctionnement normal dans lequel ledit objet portable est actif, le second mode de fonctionnement étant un mode de fonctionnement dans lequel l'objet portable est mis hors tension.

Dans un autre mode de réalisation avantageux, le premier mode de fonctionnement est un mode de fonctionnement normal dans lequel une fonction chronographe du module électronique est inactive, le second mode de fonctionnement étant un mode de fonctionnement dans lequel ladite fonction chronographe est active.

### BREVE DESCRIPTION DES FIGURES

Les buts, avantages et caractéristiques de l'invention apparaîtront plus clairement dans la description détaillée suivante d'au moins une forme de réalisation de l'invention donnée uniquement à titre d'exemple non limitatif et illustrée par les dessins annexés sur lesquels :
- Les figures 1 et 2 représentent un objet portable selon l'art antérieur;
- Les figures 3 à 6 représentent un premier mode de réalisation de l'objet portable et de ses manipulations selon l'invention;
- Les figures 7 à 10 représentent un second mode de réalisation de l'objet portable et de ses manipulations selon l'invention;

### DESCRIPTION DETAILLEE

La présente invention procède de l'idée générale de fournir une manipulation simple pour éteindre/désactiver au moins les touches tactiles d'un objet portable comme une montre.

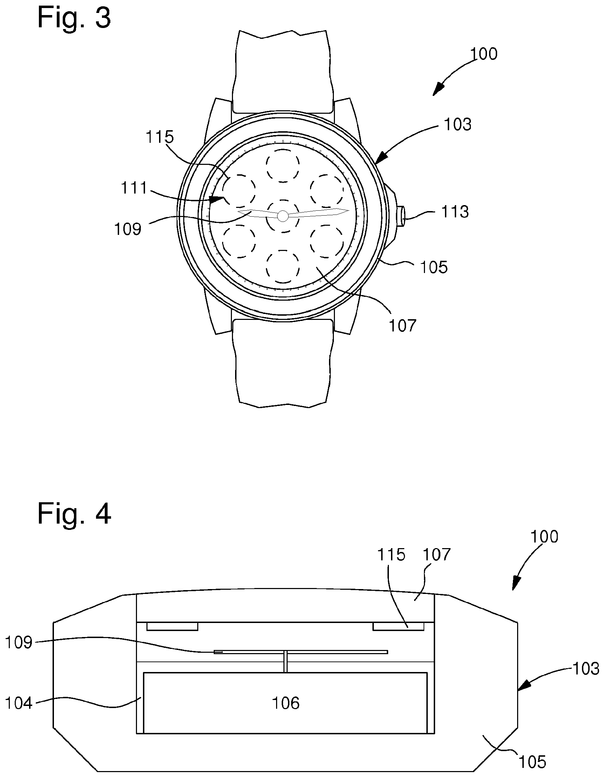

Dans un premier mode de réalisation visible aux figures 3 et 4, un objet portable 100 selon l'invention est représenté. Cet objet portable 100, ici une montre, comprend un boitier 103. Ce boitier 103 est composé d'un châssis 105 fermé par une glace 107, le châssis pouvant être composé de deux parties comme une carrure à laquelle est fixé un fond pour l'exemple d'une montre. Le châssis 105 fermé par la glace forme une enceinte 104 dans laquelle un module électronique 106 est placé. Ce module électronique comporte par exemple un microcontrôleur alimenté par une pile et communiquant avec des moyens d'affichages 109 voire des capteurs.

Le module électronique coopère en outre avec des moyens de commande 111, ces moyens de commande étant tactiles.

Bien entendu, les moyens de commande peuvent comprendre en outre au moins un poussoir 113.

Selon l'invention, le module électronique est programmé pour fonctionner selon un premier mode de fonctionnement dans lequel les moyens de commande 111 tactiles sont actifs et un second mode de fonctionnement dans lequel les moyens de commande 111 tactiles sont inactifs.

Ces moyens de commande 111 comprennent une pluralité de touches tactiles utilisées pour interagir avec le module électronique 106. Ces touches tactiles sont agencées au niveau du boitier c'est-à-dire au niveau du châssis ou de la glace, par exemple au niveau de la surface intérieure. Si les touches tactiles sont agencées au niveau du châssis 105, celui-ci doit être réalisé en un matériau approprié selon la technologie utilisée. Par exemple, dans le cas de touches tactiles capacitives, le matériau qui supporte les électrodes doit être électriquement isolant. Dans le cas d'une montre, les touches tactiles peuvent être situées au niveau de la partie faisant office de carrure, de lunette ou au niveau de la glace.

Les touches tactiles utilisant la technologie capacitive sont disposées sous forme d'électrodes électriquement conductrices, transparentes ou pas, par exemple sous/sur la glace, la lunette ou la carrure. Ces touches tactiles se présentent sous la forme de plages tactiles ou de contact 115 conductrices de sorte que lorsque l'utilisateur pose son doigt sur une zone où une plage est agencée, une variation du champ électrique se produit. Cette variation du champ électrique entraine une variation de la capacité. Le module électronique 106 va détecter cette variation de capacité indiquant la présence du doigt et l'interpréter.

Avantageusement selon l'invention, le passage du premier mode de fonctionnement au second mode de fonctionnement se fait en activant simultanément un nombre prédéterminé de plages 115. L'activation de ces plages 115 peut être un effleurement, un appui ou toute manipulation de l'utilisateur permettant l'activation de ces plages 115.

Le nombre prédéterminé de plages 115 activées simultanément pour passer du premier mode de fonctionnement au second mode de fonctionnement est choisi pour être clairement dissocié des manipulations existantes au niveau de l'objet portable.

A ce titre, on considèrera que le passage du premier mode de fonctionnement au second mode de fonctionnement se fait lorsqu'au moins la moitié des plages de contact 115 sont activées simultanément.

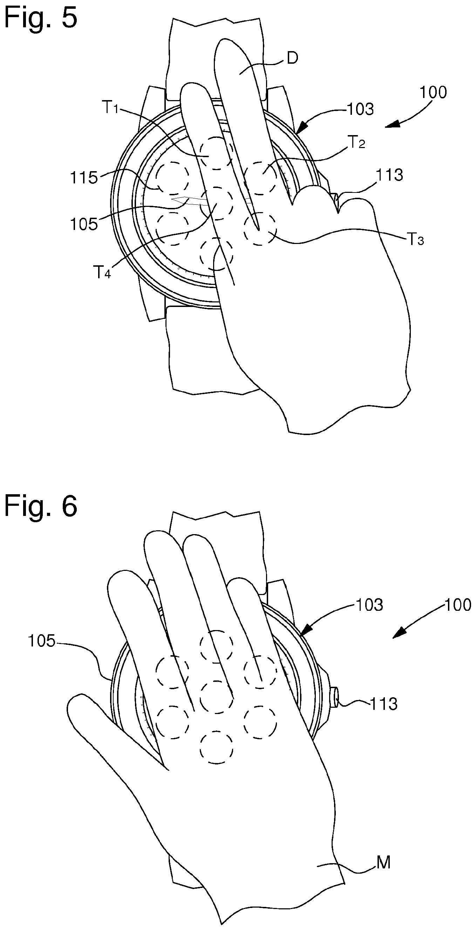

Par exemple, pour une montre Tissot T-Touch® comprenant 7 touches tactiles, 6 plages de contact 115 à la périphérie de la glace et une plage de contact 115 centrale, le passage du premier mode de fonctionnement au second mode de fonctionnement peut se faire lorsqu'au moins 3 plages sont activées simultanément. Cette manipulation est complétement distincte des manipulations de base car la programmation de cette montre prévoit une plage pour chaque fonction et donc l'appui de plusieurs plages de façon simultanée n'est pas prévu. Ces 3 touches à activer simultanément peuvent l'être en utilisant le pouce ou deux doigts D comme visible à la figure 5 où l'on voit qu'au moins quatre plages T1, T2, T3, T4 sont activées.

De façon préférentielle, le passage du premier mode de fonctionnement au second mode de fonctionnement se fait lorsque toutes les plages 115 sont activées simultanément par l'utilisateur. Typiquement, pour une montre Tissot T-Touch ® comprenant 7 plages de contact 115, l'activation de la totalité des plages 115 se fait par apposition de la main M sur la glace comme visible à la figure 6.

L'avantage d'une telle manipulation c'est à dire apposer la main M sur la glace 107 pour déclencher le passage du premier mode de fonctionnement au second mode de fonctionnement est qu'elle est simple puis qu'elle ne nécessite pas de visée particulière de la part de l'utilisateur. En effet, l'utilisateur pose sa main M et la détection de l'activation de la totalité des plages se fait, entrainant le passage du premier mode de fonctionnement au second mode de fonctionnement.

Bien entendu, il est envisageable que les technologies, résistives, piézoélectrique ou optique soient utilisées pour les touches tactiles.

Ainsi, pour la technologie résistive l'une des surfaces de l'objet portable peut comprendre localement une couche conductrice et un film plastique dont la sous-face est conductrice (résistive : ITO). La surface de l'objet portable et le film plastique sont tenues distantes l'une de l'autre par de microscopiques cales d'espacement. Un courant électrique est induit dans l'une des deux faces conductrices pendant l'opération. Lorsque l'utilisateur touche l'écran avec la pointe d'un stylet (ou d'un doigt), la pression exercée amorce un contact entre les deux faces électrifiées.

Dans le cas de la technologie piézoélectrique, la grille de détection est conçue pour transformer un appui de l'utilisateur c'est-à-dire une contrainte en signal électrique. L'appui sur la touche tactile génère une contrainte transformée en signal électrique qui une fois détecté permet la localisation de la position.

Dans le cas de la technologique optique, la grille de détection utilise la technologie optique c'est-à-dire un réseau optique. Un appui de l'utilisateur sur la touche tactile entraine la déformation locale de celui-ci. Cette déformation entraine une modification du réseau optique. Cette modification est détectée et localisée pour récupérer une information de position.

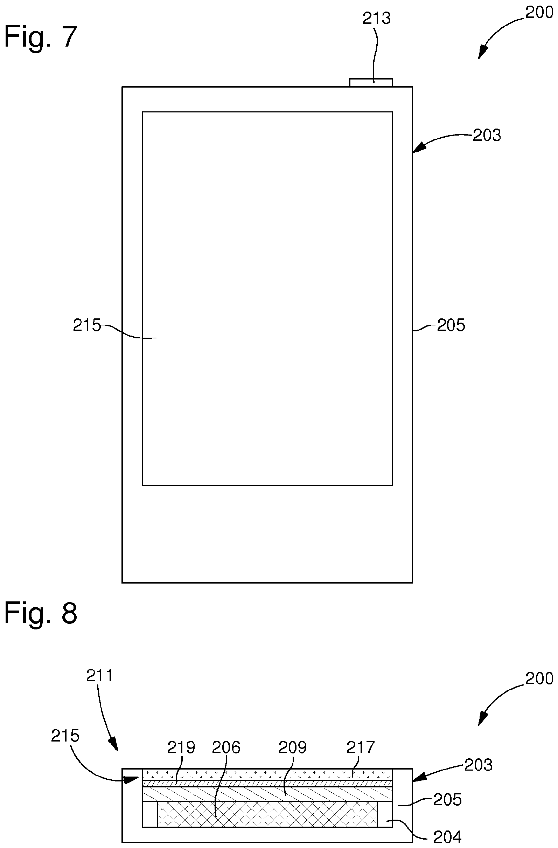

Dans un second mode de réalisation visible aux figures 7 et 8, un objet portable 200 selon l'invention est représenté. Cet objet portable 200, ici un téléphone mobile ou une tablette, comprend un boitier 203. Ce boitier 203 est comporte d'un châssis 205 fermé par une glace 207. Le châssis 205 fermé par la glace forme une enceinte 204 dans laquelle un module électronique 206 est placé. Ce module électronique 206 comporte par exemple un microprocesseur alimenté par une pile et communiquant avec des moyens d'affichage 209, voire des capteurs.

Le module électronique coopère en outre avec des moyens de commande 211, ces moyens de commande étant tactiles.

Bien entendu, les moyens de commande peuvent comprendre en outre au moins un poussoir 213.

Les moyens de commande 211 sont un écran tactile 215 utilisé pour interagir avec le module électronique. Un écran tactile 215 est en général composé d'une plaque de verre ou de polymère 217 à laquelle est associée une grille électrique de détection 219. Un tel écran tactile peut utiliser la technologie capacitive ou résistive. D'autres technologies, comme l'optique ou la piézoélectricité peuvent aussi être utilisées, selon les applications.

Un écran résistif est constitué d'une plaque de verre dont la surface est conductrice (résistive : ITO). Celle-ci est recouverte par un film plastique dont la sous-face est conductrice (résistive : ITO). Ces deux couches sont tenues distantes l'une de l'autre par de microscopiques cales d'espacement. Une couche additionnelle peut être ajoutée en surface pour éviter les égratignures (par exemple, par les pointes de stylets). Un courant électrique est induit dans l'une des deux faces conductrices pendant l'opération. Lorsque l'utilisateur touche l'écran avec la pointe d'un stylet (ou d'un doigt), la pression exercée amorce un contact entre les deux faces électrifiées. La mesure de la tension aux bornes des électrodes de l'autre face conductrice permet de déterminer la position du doigt ou du stylet. Une fois les coordonnées déterminées, le traitement logiciel par le système s'établit et détermine quelles zones ont été activées.

Dans un écran capacitif, une couche conductrice, par exemple à base d'indium, est placée sur une plaque de verre, ou tout autre matériau électriquement isolant, puis structurée en un réseau de plages tactiles. La présence du doigt de l'utilisateur modifie la distribution des lignes de champ électriques dans l'espace, ce qui correspond à une variation de la capacité des diverses plages tactiles. La variation de la capacité des plages tactiles est mesurée à intervalles réguliers et est interprétée par le module électronique qui va en déduire la position du doigt de l'utilisateur.

Dans le cas de la technologie piézoélectrique, la grille de détection est conçue pour transformer un appui de l'utilisateur c'est-à-dire une contrainte en signal électrique. L'appui sur la face flexible de l'écran génère une contrainte transformée en signal électrique.

Dans le cas de la technologique optique, la grille de détection utilise la technologie optique c'est-à-dire un réseau optique. Un appui de l'utilisateur sur l'écran entraine la déformation locale de celui-ci. Cette déformation entraine une modification du réseau optique. Cette modification est détectée et localisée pour récupérer une information de position.

Avantageusement selon l'invention, le passage du premier mode de fonctionnement au second mode de fonctionnement se fait en détectant un nombre prédéterminé d'activation de zones Zi sur l'écran tactile 215. L'activation de ces zones Zi sur l'écran 215 peut être un effleurement, un appui ou toute manipulation de l'utilisateur permettant l'activation de l'écran tactile 215.

Le nombre prédéterminé de zones Zi simultanément activées pour passer du premier mode de fonctionnement au second mode de fonctionnement est choisi pour être clairement dissocié des manipulations existantes au niveau de l'objet portable 200.

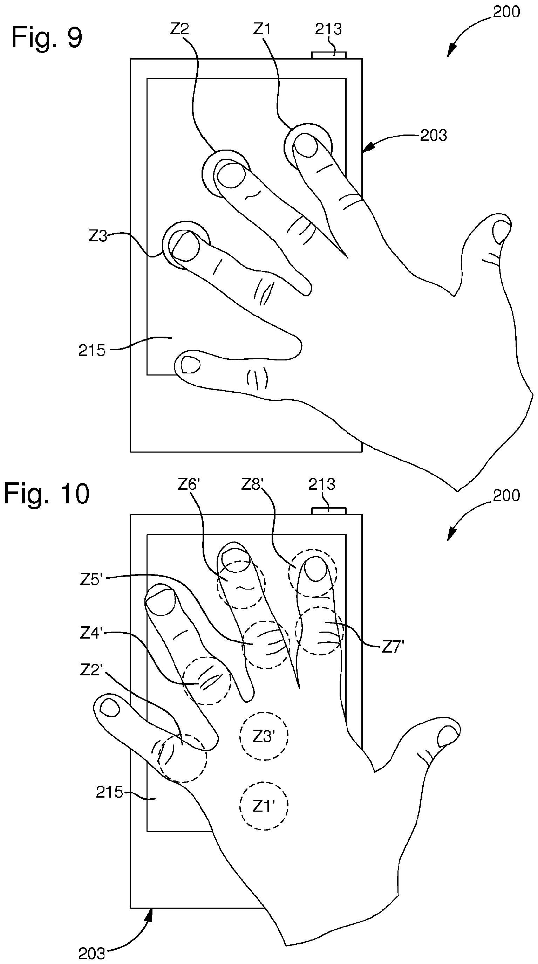

A ce titre, on considèrera que le passage du premier mode de fonctionnement au second mode de fonctionnement se fait lorsqu'au moins trois zones Z1, Z2, Z3 sont détectées simultanément comme visible à la figure 9. En effet, pour les smartphones actuels, la fonction multitouche la plus fréquente consiste à utiliser deux doigts en simultané pour manipuler une image, un objet comme par exemple l'agrandir ou la faire pivoter. Préférentiellement, on considèrera que le passage du premier mode de fonctionnement au second mode de fonctionnement se fait lorsque cinq zones (Zi) sont détectées simultanément (non représenté). Cela signifie donc que l'utilisateur pose les doigts d'une main sur l'écran pour passer d'un mode à l'autre.

Encore plus préférentiellement, on considèrera que le passage du premier mode de fonctionnement au second mode de fonctionnement se fait lorsque plus de cinq zones Zi sont activées simultanément, c'est-à-dire lorsque la main M entière de l'utilisateur est posée sur ledit écran comme visible à la figure 10.

L'avantage d'une telle manipulation c'est à dire apposer la main sur l'écran pour déclencher le passage du premier mode de fonctionnement au second mode de fonctionnement est qu'elle est simple puisqu'elle ne nécessite pas de visée particulière de la part de l'utilisateur. Dans le cas d'un téléphone mobile de dernière génération ayant un grand écran d'environ quatre à cinq pouces (8 à 13cm) de diagonale, l'activation de la moitié des touches tactiles se fait par apposition de la main sur l'écran c'est-à-dire une manipulation très simple.

Dans un premier mode d'exécution, le premier mode de fonctionnement est un mode de fonctionnement dit normal dans lequel les touches tactiles permettent à l'utilisateur d'utiliser des fonctions ou de régler la montre. Le second mode de fonctionnement est alors un mode de fonctionnement dit économique dans lequel les touches tactiles sont inactives permettant ainsi d'économiser de l'énergie et d'éviter des manipulations non souhaitées.

Dans un second mode d'exécution, le premier mode de fonctionnement est un mode de fonctionnement dans lequel une fonction spécifique est inactive alors que le second mode de fonctionnement est un mode de fonctionnement dans lequel la fonction spécifique devient active. En effet, pour certaines fonctions simples comme les fonctions compte à rebours ou chronographe, un démarrage rapide est nécessaire afin de ne pas perdre du temps lors de l'activation de la fonction.

Dans une variante des premier et second modes d'exécution, il est envisageable que le passage du premier mode de fonctionnement au second mode de fonctionnement se fasse automatiquement dans certaines conditions. En effet, dans certaines conditions, une activation des touches tactiles ou une multitude d'appuis peuvent être détectées sans que l'utilisateur n'ait agi sur la glace ou l'écran. Par exemple, la technologie capacitive des glaces tactiles à touches capacitives ou des écrans tactiles capacitifs est sensible à l'eau. Cela signifie que lorsque l'objet portable muni d'une glace tactile à touches capacitives ou d'un écran tactile capacitif est plongé dans l'eau, les touches tactiles de la glace ou de l'écran tactile vont s'activer plus ou moins. Le module électronique va alors considérer que l'utilisateur pose la main sur la glace ou l'écran, et va donc engager le passage du premier mode de fonctionnement au second mode de fonctionnement.

Cette variante permet avantageusement une solution dans laquelle une fonction chronographe s'enclenche lorsque le nageur entre dans l'eau, celle-ci activant les touches capacitives de la glace tactile. Cela permet une facilité de déclenchement de la fonction chronographe.

Cette variante permet une autre solution dans laquelle une fonction extinction de l'objet portable s'opère dans le cas où ledit objet portable se trouve dans l'eau. Cela permet d'essayer de sauvegarder l'objet portable en cas de chute dans l'eau.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

Ainsi, il est envisageable que l'objet portable puisse être muni d'un bouton spécifique pour désactiver les moyens de commande tactiles ou qu'une manipulation de désactivation soit programmée. De plus, un compte à rebours ou Timeout peut être possible.

## Revendications

1. Objet portable (100) comprenant un boitier (103) composé d'un châssis (105) fermé par une glace (107) formant une enceinte dans laquelle un module électronique (106) est placé, ledit module électronique coopérant avec des moyens de commande (111) comportant au moins une pluralité de plages tactiles (115) pour interagir avec le module électronique, chaque plage tactile étant située sur une surface du boitier, ledit module électronique étant programmé pour opérer dans un premier mode de fonctionnement dans lequel au moins les plages tactiles sont électriquement aptes à être activées, l'activation d'une plage tactile se faisant par pression avec un corps permettant une perturbation optique de ladite plage tactile, et pour opérer dans un second mode de fonctionnement dans lequel au moins les plages tactiles ne sont pas électriquement aptes à être activées, **caractérisé en ce que** le passage du premier mode de fonctionnement au second mode de fonctionnement se fait suite à la détection par ledit module électronique de l'activation simultanée d'au moins un nombre déterminé de plages de contact, les plages tactiles activées étant choisies aléatoirement.

2. Objet portable selon la revendication 1, **caractérisé en ce que** le nombre déterminé de plages tactiles (115) activées pour permettre le passage du premier mode de fonctionnement au second mode de fonctionnement est égal à au moins 50% du nombre de plages tactiles présentes.

3. Objet portable selon la revendication 1, **caractérisé en ce que** le nombre déterminé de plages de tactiles (115) activées pour permettre le passage du premier mode de fonctionnement au second mode de fonctionnement est égal à la totalité du nombre de plages tactiles présentes.

4. Objet portable selon l'une des revendications précédentes, **caractérisé en ce que** l'activation des plages tactiles (115) se fait par contact avec un corps permettant une perturbation du champ électrique vu par la plage tactile.

5. Objet portable selon la revendication 4, **caractérisé en ce que** le corps permettant une perturbation du champ électrique est un volume d'eau.

6. Objet portable selon l'une des revendications 1 à 3, **caractérisé en ce que** l'activation des plages tactiles (115) se fait par pression avec un corps permettant, par effet résistif, l'apparition d'une tension au niveau de la plage tactile.

7. Objet portable selon l'une des revendications 1 à 3, **caractérisé en ce que** l'activation des plages tactiles (115) se fait par pression avec un corps permettant, par effet piézoélectrique, l'apparition d'une tension au niveau de la plage tactile.

8. Objet portable selon l'une des revendications 1 à 3, **caractérisé en ce que** l'activation des plages tactiles (115) se fait par pression avec un corps permettant une perturbation optique de la plage tactile.

9. Objet portable (200) comprenant un boitier (203) composé d'un châssis (205) fermé par un écran (215) formant une enceinte (204) dans laquelle un module électronique (206) est placé, ledit écran comportant une glace (217) associée à une grille électrique de détection (219) formant des moyens de commande (211) coopérant avec le module électronique pour interagir avec lui, ledit module électronique étant programmé pour opérer dans un premier mode de fonctionnement dans lequel au moins l'écran est activé et pour opérer dans un second mode de fonctionnement dans lequel au moins l'écran est désactivé, **caractérisé en ce que** le passage du premier mode de fonctionnement au second mode de fonctionnement se fait suite à la détection par ledit module électronique d'au moins un nombre déterminé de zones (Zi, Zi') aléatoires activées.

10. Objet portable selon la revendication 9, **caractérisé en ce que** le nombre déterminé de zones (Zi) activées est égal à au moins trois.

11. Objet portable selon la revendication 9, **caractérisé en ce que** le nombre déterminé de zones (Zi) activées est égal à au moins le nombre de doigt d'une main.

12. Objet portable selon l'une des revendications 9 à 11, **caractérisé en ce que** l'écran est du type capacitif, l'activation étant opérée avec un corps permettant une perturbation du champ électrique.

13. Objet portable selon l'une des revendications 9 à 11, **caractérisé en ce que** l'écran (215) est du type résistif.

14. Objet portable selon l'une des revendications 9 à 11, **caractérisé en ce que** l'écran (215) est du type optique.

15. Objet portable selon l'une des revendications 9 à 11, **caractérisé en ce que** l'écran (215) est du type piézoélectrique.

16. Objet portable selon la revendication 12, **caractérisé en ce que** le corps permettant une perturbation du champ électrique est un volume d'eau.

17. Objet portable selon l'une des revendications précédentes, **caractérisé en ce que** le premier mode de fonctionnement est un mode de fonctionnement normal dans lequel le module électronique (206) est actif, le second mode de fonctionnement étant un mode de fonctionnement en veille dans lequel le module électronique (206) est inactif.

18. Objet portable selon l'une des revendications 1 à 16, **caractérisé en ce que** le premier mode de fonctionnement est un mode de fonctionnement normal dans lequel ledit objet portable est actif, le second mode de fonctionnement étant un mode de fonctionnement dans lequel ledit objet portable est mis hors tension.

19. Objet portable selon l'une des revendications 1 à 16, **caractérisé en ce que** le premier mode de fonctionnement est un mode de fonctionnement normal dans lequel une fonction chronographe du module électronique est inactive, le second mode de fonctionnement étant un mode de fonctionnement dans lequel ladite fonction chronographe est active.

## Patentansprüche

1. Tragbarer Gegenstand (100) mit einem Gehäuse (103) das ein Chassis (105) aufweist, das verschlossen ist durch ein Glas (107) und das einen Raum bildet, in dem ein elektronisches Modul (106) angeordnet ist, wobei das elektronische Modul mit Steuermitteln (111) zusammenwirkt, die mindestens mehrere taktile Bereiche (115) zum Interagieren mit dem elektronischen Modul aufweisen, wobei jeder taktile Bereich auf einer Oberfläche des Gehäuses angeordnet ist, wobei das elektronische Modul programmiert ist, um in einem ersten Betriebsmodus zu arbeiten, in dem mindestens die taktilen Bereiche elektrisch aktivierbar sind, und die Aktivierung eines taktilen Bereichs durch Drücken mit einem Körper erfolgt, der eine optische Störung des taktilen Bereichs ermöglicht, und um in einem zweiten Betriebsmodus zu arbeiten, in dem zumindest die taktilen Bereiche nicht elektrisch aktivierbar sind, **dadurch gekennzeichnet, dass** der Wechsel vom ersten Betriebsmodus in den zweiten Betriebsmodus erfolgt, nachdem das elektronische Modul die gleichzeitige Aktivierung von mindestens einer bestimmten Anzahl von Kontaktbereichen erkannt hat, wobei die aktivierten taktilen Bereiche zufällig ausgewählt werden.

2. Tragbarer Gegenstand nach Anspruch 1, **dadurch gekennzeichnet, dass** die bestimmte Anzahl von taktilen Bereichen (115), die aktiviert werden, um den Übergang vom ersten Betriebsmodus zum zweiten Betriebsmodus zu ermöglichen, gleich mindestens 50% der Anzahl der vorhandenen taktilen Bereiche ist.

3. Tragbarer Gegenstand nach Anspruch 1, **dadurch gekennzeichnet, dass** die bestimmte Anzahl von taktilen Bereichen (115), die aktiviert werden, um den Übergang vom ersten Betriebsmodus zum zweiten Betriebsmodus zu ermöglichen, gleich der Gesamtzahl der vorhandenen taktilen Bereiche ist.

4. Tragbarer Gegenstand nach einem der vorhergehenden Ansprüche, **dadurch gekennzeichnet, dass** die Aktivierung der taktilen Bereiche (115) durch Kontakt mit einem Körper erfolgt, der eine Störung des von dem taktilen Bereich erkannten elektrischen Feldes ermöglicht.

5. Tragbarer Gegenstand nach Anspruch 4, **dadurch gekennzeichnet, dass** der Körper, der eine Störung des elektrischen Feldes ermöglicht, ein Wasservolumen ist.

6. Tragbarer Gegenstand nach einem der Ansprüche 1 bis 3, **dadurch gekennzeichnet, dass** die Aktivierung der taktilen Bereiche (115) durch Druck mit einem Körper erfolgt, der durch Widerstandswirkung das Auftreten einer Spannung in Bezug auf den taktilen Bereich ermöglicht.

7. Tragbarer Gegenstand nach einem der Ansprüche 1 bis 3, **dadurch gekennzeichnet, dass** die Aktivierung der taktilen Bereiche (115) durch Druck mit einem Körper erfolgt, der durch piezoelektrische Wirkung das Auftreten einer Spannung im taktilen Bereich ermöglicht.

8. Tragbarer Gegenstand nach einem der Ansprüche 1 bis 3, **dadurch gekennzeichnet, dass** die Aktivierung der taktilen Bereiche (115) durch Druck mit einem Körper erfolgt, der eine optische Störung des taktilen Bereichs ermöglicht.

9. Tragbarer Gegenstand (200) mit einem Gehäuse (203) das ein Chassis (205) aufweist, das verschlossen ist mit einem Display (215), und das einen Raum (204) bildet, in dem ein elektronisches Modul (206) angeordnet ist, wobei das Display ein Glas (217) umfasst, das einem elektrischen Erfassungsgitter (219) zugeordnet ist, das die Steuermittel (211) bildet, die mit dem elektronischen Modul zusammenwirken, um mit ihm zu interagieren, wobei das elektronische Modul so programmiert ist, dass es in einem ersten Betriebsmodus arbeitet, in dem mindestens das Display aktiviert ist, und in einem zweiten Betriebsmodus arbeitet, in dem mindestens das Display deaktiviert ist, **dadurch gekennzeichnet, dass** der Wechsel vom ersten Betriebsmodus in den zweiten Betriebsmodus auf das Erkennen mindestens einer bestimmten Anzahl zufällig aktivierter Zonen (Zi, Zi') durch das elektronische Modul folgt.

10. Tragbarer Gegenstand nach Anspruch 9, **dadurch gekennzeichnet, dass** die bestimmte Anzahl von aktivierten Zonen (Zi) mindestens gleich drei ist.

11. Tragbarer Gegenstand nach Anspruch 9, **dadurch gekennzeichnet, dass** die bestimmte Anzahl von aktivierten Zonen (Zi) mindestens gleich der Anzahl der Finger einer Hand ist.

12. Tragbarer Gegenstand nach einem der Ansprüche 9 bis 11, **dadurch gekennzeichnet, dass** das Display vom kapazitiven Typ ist, wobei die Aktivierung mit einem Körper durchgeführt wird, der eine Störung des elektrischen Feldes ermöglicht.

13. Tragbarer Gegenstand nach einem der Ansprüche 9 bis 11, **dadurch gekennzeichnet, dass** das Display (215) vom resistiven Typ ist.

14. Tragbarer Gegenstand nach einem der Ansprüche 9 bis 11, **dadurch gekennzeichnet, dass** das Display (215) vom optischen Typ ist.

15. Tragbarer Gegenstand nach einem der Ansprüche 9 bis 11, **dadurch gekennzeichnet, dass** das Display (215) vom piezoelektrischen Typ ist.

16. Tragbarer Gegenstand nach Anspruch 12, **dadurch gekennzeichnet, dass** der Körper, der eine Störung des elektrischen Feldes ermöglicht, ein Wasservolumen ist.

17. Tragbarer Gegenstand nach einem der vorhergehenden Ansprüche, **dadurch gekennzeichnet, dass** der erste Betriebsmodus ein normaler Betriebsmodus ist, bei dem das elektronische Modul (206) aktiv ist, und der zweite Betriebsmodus ein Standby-Betriebsmodus ist, bei dem das elektronische Modul (206) inaktiv ist.

18. Tragbarer Gegenstand nach einem der Ansprüche 1 bis 16, **dadurch gekennzeichnet, dass** der erste Betriebsmodus ein normaler Betriebsmodus ist, bei dem der tragbare Gegenstand aktiv ist, und der zweite Betriebsmodus ein Betriebsmodus ist, bei dem der tragbare Gegenstand ausgeschaltet ist.

19. Tragbarer Gegenstand nach einem der Ansprüche 1 bis 16, **dadurch gekennzeichnet, dass** der erste Betriebsmodus ein normaler Betriebsmodus ist, bei dem eine Chronographenfunktion des elektronischen Moduls inaktiv ist, und der zweite Betriebsmodus ein Betriebsmodus ist, bei dem diese Chronographenfunktion aktiv ist.

## Claims

1. Portable object (100) including a case (103), formed of a frame (105) closed by a glass (107) forming a housing in which an electronic module (106) is placed, said electronic module cooperating with control means (111) including at least one plurality of touch pads (115) for interacting with the electronic module, each touch pad being located on one surface of the case, said electronic module being programmed to operate in a first operating mode in which at least the touch pads are electrically activatable, activation of a touch pad occurring by pressure applied by a body causing an optical disturbance of said touch pad, and to operate in a second operating mode in which at least the touch pads are not electrically activatable, **characterized in that** the change from the first operating mode to the second operating mode occurs following detection by said electronic module of the simultaneous activation of at least a determined number of touch pads, the activated touch pads being randomly selected.

2. Portable object according to claim 1, **characterized in that** the determined number of touch pads (115) activated to allow the change from the first operating mode to the second operating mode is equal to at least 50% of the number of touch pads present.

3. Portable object according to claim 1, **characterized in that** the determined number of touch pads (115) activated to allow the change from the first operating mode to the second operating mode is equal to the total number of touch pads present.

4. Portable object according to any of the preceding claims, **characterized in that** activation of the touch pads (115) occurs by contact with a body causing a disturbance of the electric field seen by the touch pad.

5. Portable object according to claim 4, **characterized in that** the body causing a disturbance of the electric field is a volume of water.

6. Portable object according to any of claims 1 to 3, **characterized in that** activation of the touch pads (115) occurs by pressure applied by a body causing, by the effect of resistance, the appearance of a voltage on the touch pad.

7. Portable object according to any of claims 1 to 3, **characterized in that** activation of the touch pads (115) occurs by pressure applied by a body causing, by piezoelectric effect, the appearance of a voltage on the touch pad.

8. Portable object according to any of claims 1 to 3, **characterized in that** activation of the touch pads (115) occurs by pressure applied by a body causing an optical disturbance of the touch pad.

9. Portable object (200) including a case (203) formed of a frame (205) closed by a screen (215) forming a housing (204) in which an electronic module (206) is placed, said screen including a glass (217) associated with an electric detection grid (219) forming control means (211) cooperating with the electronic module to interact therewith, said electronic module being programmed to operate in a first operating mode, in which at least the screen is activated and to operate in a second operating mode, in which at least the screen is deactivated, **characterized in that** the change from the first operating mode to the second operating mode occurs following detection by said electronic module of at least a determined number of random activated areas (Zi, Zi').

10. Portable object according to claim 9, **characterized in that** the determined number of activated areas (Zi) is equal to at least three.

11. Portable object according to claim 9, **characterized in that** the determined number of activated areas (Zi) is equal to at least the number of fingers of one hand.

12. Portable object according to any of claims 9 to 11, **characterized in that** the screen is of the capacitive type, activation being achieved with a body causing a disturbance of the electric field.

13. Portable object according to any of claims 9 to 11, **characterized in that** the screen (215) is of the resistive type.

14. Portable object according to any of claims 9 to 11, **characterized in that** the screen (215) is of the optical type.

15. Portable object according to any of claims 9 to 11, **characterized in that** the screen (215) is of the piezoelectric type.

16. Portable object according to claim 12, **characterized in that** the body causing a disturbance of the electric field is a volume of water.

17. Portable object according to any of the preceding claims, **characterized in that** the first operating mode is a normal operating mode in which the electronic module (206) is active, the second operating mode being a standby operating mode in which the electronic module (206) is inactive.

18. Portable object according to any of claims 1 to 16, **characterized in that** the first operating mode is a normal operating mode in which said portable object is active, the second operating mode being an operating mode in which said portable object is powered off.

19. Portable object according to any of claims 1 to 16, **characterized in that** the first operating mode is a normal operating mode in which a chronograph function of the electronic module is inactive, the second operating mode being an operating mode in which said chronograph function is active.
